# EUROPÄISCHE PATENTSCHRIFT

(11) **EP 2 897 506 B1**
(45) Veröffentlichungstag und Bekanntmachung des Hinweises auf die Patenterteilung: **13.03.2019**
(21) Anmeldenummer: 13779127.3
(22) Anmeldetag: 23.09.2013
(51) Int. Cl.: A47J 31/44

(54) **VORRICHTUNG ZUR BEREITUNG VON WAHLWEISE KALTEM ODER WARMEM MILCHSCHAUM ODER ABGABE WAHLWEISE KALTER ODER WARMER MILCH**
DEVICE FOR PREPARING MILK FROTH THAT CAN BE OPTIONALLY HOT OR COLD, OR FOR DISPENSING OPTIONALLY HOT OR COLD MILK
DISPOSITIF POUR PRÉPARER UNE MOUSSE DE LAIT FROIDE OU CHAUDE OU POUR DISTRIBUER DU LAIT FROID OU CHAUD

(30) Priorität: 21.09.2012 DE 202012009076 U
(43) Veröffentlichungstag der Anmeldung: 29.07.2015
(73) Patentinhaber: Eugster/Frismag AG, 8580 Amriswil (CH)
(72) Erfinder: STUTZ, Dieter, 9565 Bussnang (CH)
(74) Vertreter: Patentanwälte Behrmann Wagner PartG mbB
(86) Internationale Anmeldenummer: PCT/EP2013/002855
(87) Internationale Veröffentlichungsnummer: WO 2014/044406

(56) Entgegenhaltungen:
- EP-A2- 1 658 796

## Beschreibung

Die Erfindung betrifft eine Vorrichtung zur Bereitung von wahlweise kaltem oder warmem Milchschaum oder Abgabe wahlweise kalter oder warmer Milch nach dem Oberbegriff des Anspruchs 1.

Nach dem Stand der Technik sind Kaffeezubereitungsgeräte, insbesondere Espressomaschinen, häufig mit Milchschaumzubereitungsvorrichtungen ausgestattet, die als wesentlichen Bestandteil eine Schäumvorrichtung mit einem als Venturidüse ausgebildeten Strömungsweg umfasst. Der Strömungsweg steht mit einer Milchleitung in Verbindung, in die zur Milchschaumbereitung eine Luftansaugleitung oder -öffnung münden kann. Zur Milchschaumbereitung wird dem als Venturidüse ausgebildeten Strömungsweg der Schäumvorrichtung aus einem Dampfgenerator des Kaffeezubereitungsgeräts Dampf zugeleitet, durch dessen Strömung in dem Strömungsweg ein Unterdruck erzeugt wird, der über die Milchleitung Milch aus einem Milchbehälter und über die Luftzuführung Luft ansaugt. Demzufolge werden in dem Strömungsweg Dampf, Milch und Luft vermischt und zu warmem Milchschaum aufgeschäumt. Durch Absperren der Luftzufuhr unterbleibt eine Schaumerzeugung in dem Strömungsweg der Schäumvorrichtung und es wird nur heiße Milch bereitet. Bekannt ist es auch, in einer Vorrichtung warmen Milchschaum oder warme Milchgetränke dadurch zu bereiten, dass durch eine Pumpe Milch aus einem Behälter angesaugt und beim Ansaugen durch einen Durchlauferhitzer geleitet und dabei erhitzt wird, wonach sie über eine Drosselstelle zu einem Auslass gefördert wird (EP 1 593 330 A2). Zur Schaumbereitung wird der durch eine Ansaugleitung strömenden Milch Luft aus einer Luftzufuhrleitung beigemischt. Zur Reinigung des Durchlauferhitzers und mit diesem in Verbindung stehender Leitungen, insbesondere der Ansaugleitung und einer Auslassleitung zu einem Auslass der Vorrichtung kann Reinigungsflüssigkeit aus einer externen Quelle über ein Reinigungsventil in einen Abschnitt der Ansaugleitung eingeleitet werden. Am Anfang dieses Abschnitts der Ansaugleitung ist ein weiteres Ventil mit einem Auffangbehälter oder einem Ablauf angeordnet, durch den Reinigungsflüssigkeit bzw. Wasser aus der Ansaugleitung abfließen kann. Ein zu dem Milchbehälter benachbarter Abschnitt der Ansaugleitung, der insbesondere von oben in den Milchbehälter hineinragt, kann damit aber nicht gespült werden, da die Reinigungsflüssigkeit nicht in einen Milchbehälter einströmen darf. Dies wird durch wenigstens ein Rückschlagventil in der Ansaugleitung verhindert. Dieser Abschnitt der Ansaugleitung muss zur Spülung aus dem Milchbehälter entnommen werden und einem separaten Spülvorgang unterworfen werden. Der Milchbehälter kann ausgetauscht werden.

In jüngerer Zeit wird von Vorrichtungen zur Bereitung von Milchschaum nicht nur die Möglichkeit einer Erzeugung von warmem Milchschaum gefordert, sondern auch die einer Abgabe von kaltem Milchschaum. Hierzu wird kalte Milch mittels einer Förderpumpe aus einem Vorratsbehälter in eine Schäumeinheit gepumpt und die die Schäumung hervorrufende Luft entweder über eine in eine Milchleitung mündende Luftzuführleitung, in der durch die Strömungsgeschwindigkeit der Milch ein Unterdruck entsteht, angesaugt oder die Luft wird der Milch durch einen von einer Pumpe erzeugten Überdruck über eine Luftleitung zugeführt. Eine Vermischung der Milch mit der Luft kann dabei bereits in der Milchleitung oder erst in einer Milchschäumvorrichtung erfolgen.

Weiterhin ist es bekannt, in derselben Milchschaumbereitungsvorrichtung wahlweise Warmschaum oder Kaltschaum zu erzeugen. Zur Erzeugung von warmem Milchschaum oder auch nur warmer Milch kann die mittels der Pumpe geförderte Milch bzw. das der Schäumvorrichtung zugeführte Milch-Luftgemisch vor oder in der Schäumvorrichtung durch einen Wärmetauscher geführt werden.

Mit einer solchen bekannten Vorrichtung zur Erzeugung von Milchschaum oder Milchgetränken, in der auf Wunsch Milch aus einem Behälter mittels einer Pumpe angesaugt und zu einem Auslass gefördert wird, wobei der Milch Luft beigemischt werden kann und das dadurch entstehende Milch-Luftgemisch im kaltem oder heißem Zustand durch eine Drosselstelle zu Milchschaum verarbeitet werden kann, ist vorgesehen, das Milch-Luftgemisch wahlweise direkt oder über einen Durchlauferhitzer der Vorrichtung zum Auslass zu fördern (WO 2008/083941 A1). Im Einzelnen weist hierzu ein Milcheinlass, welcher den Milchbehälter über einen Milchventilweg mit der Kaltschäumvorrichtung verbindet, insbesondere mindestens einen Abschnitt einer Milchansaugleitung auf, der in den Milchbehälter hineinreicht. Die Milchansaugleitung führt über ein Ventil, mit dem sie auf einen weiteren Behälter umgestellt werden kann, zu einer Pumpe. Eine Auslassleitung stromabwärts der Pumpe weist zwei zwischen der Drosselstelle und dem Auslass angeordnete, über ein Ventil wahlweise einschaltbare Parallelabschnitte auf, wobei nur einem dieser Parallelabschnitte der Durchlauferhitzer zugeordnet ist. Damit kann kalter oder heißer Milchschaum zum Auslass gefördert werden. Diese Vorrichtung zur Erzeugung von Milchschaum oder Milchgetränken kann als selbstständiges Gerät ausgebildet sein oder als ein Bestandteil einer Kaffeemaschine. Die Vorrichtung kann ähnlich derjenigen nach der oben genannten EP 1 593 330 A2 gereinigt werden. Der vorliegenden Erfindung liegt die Aufgabe zugrunde, eine kompakte, robuste und effiziente Vorrichtung zur wahlweisen Bereitung von kaltem oder warmem Milchschaum oder Abgabe kalter oder warmer Milch zu schaffen, die sich durch geringeren Aufwand und optimierte Reinigung bei reduziertem Reinigungserfordernis auszeichnet.

Diese Aufgabe wird mit einer Vorrichtung der eingangs genannten Gattung mit den in Anspruch 1 angegebenen Merkmalen gelöst.

Demgemäß geht die Erfindung aus von einer Vorrichtung zur Bereitung von wahlweise kaltem oder warmem Milchschaum oder Abgabe wahlweise kalter oder warmer Milch, die einen aus der Vorrichtung entnehmbaren Milchbehälter, einen Milcheinlass, welcher den Milchbehälter über einen Milchventilweg mit einer über einen Luftventilweg aktivierbaren Kaltschäumvorrichtung verbindet, eine stromabwärts der Schäumvorrichtung angeordnete Auslassleitung mit einem Auslass sowie gegebenenfalls wahlweise aktivierbare Mittel zum Erwärmen des in der Schäumvorrichtung bereiteten Milchschaums bzw. der die Kaltschäumvorrichtung durchströmenden Milch umfasst. Die Kaltschäumvorrichtung kann insbesondere eine Drosselstrecke bzw. Drossel aufweisen, die von der Milch durchströmt wird, die zur Schaumbereitung mit Luft durchsetzt ist. Die Schaumerzeugung kann bereits stromabwärts der Verbindung des Milchventilwegs mit dem Luftventilweg beginnen. Zum Transport der Milch durch den Milcheinlass, den Milchventilweg und die Kaltschäumvorrichtung kann eine Pumpe, insbesondere eine Saugpumpe, vorgesehen sein.

Erfindungsgemäß ist der Milchbehälter in die Vorrichtung zur Bereitung von wahlweise kaltem oder warmem Milchschaum oder Abgabe wahlweise kalter oder warmer Milch geführt in eine bestimmte Position einsetzbar und weist an seinem Boden ein Milch-Steckventil auf. Eine zu diesem passende komplementäre Milch-Steckventilaufnahme ist als Milcheingang unmittelbar an dem Milchventilweg, also einem Ventil der Vorrichtung fest angeordnet und so ausgebildet, dass bei Einsetzen des Milchbehälters das Milch-Steckventil ohne Weiteres in die komplementäre Milch-Steckventilaufnahme eingesteckt wird und einrastet. Die komplementäre Milch-Steckventilaufnahme ist dabei direkt unter dem Milch-Steckventil des Milchbehälters ortsfest angeordnet.

Somit ist der Milchströmungsweg von dem in die Vorrichtung eingesetzten Milchbehälter bis zu dem Milcheingang des Milchventilwegs minimiert. Insbesondere ist keine Milchansaugleitung oder Milcheingangsleitung stromaufwärts des Milcheingangs des Milchventilwegs zu spülen, hierzu aus dem Milchbehälter zu entnehmen und mit einer externen Reinigungsflüssigkeitsquelle wie einem Spülflüssigkeitsbehälter zu verbinden und anschließend wieder in den Milchbehälter einzusetzen. Der Hygienezustand des Milchwegs kann dadurch bei vereinfachter Handhabung der Vorrichtung verbessert werden.

Zur exakten Führung und Positionierung des Milchbehälters umfasst die Vorrichtung zur Bereitung von wahlweise kaltem oder warmen Milchschaum oder Abgabe wahlweise kalter oder warmer Milch nach Anspruch 2 einen Gehäusesockel, an dem eine Milchbehälteraufnahmekammer fest angeordnet ist, und der Milchbehälter kann in die Milchbehälteraufnahmekammer dergestalt von oben geführt eingesetzt werden, dass das Milch-Steckventil an dem Boden des Milchbehälters in die ortsfeste komplementäre Milch-Steckventilaufnahme an dem Milcheingang direkt an dem Milchventilweg bzw. Ventil eingesteckt wird und in dieser einrastet. Damit wird eine sichere dichte Verbindung zwischen dem Milch-Steckventil des Milchbehälters und der komplementären Milch-Steckventilaufnahme an dem Gehäusesockel der Vorrichtung gewährleistet.

Besonders zweckmäßig ist nach Anspruch 3 die Milchbehälteraufnahmekammer mit der Kaltseite eines Peltierelements flächig wärmeleitend verbunden, wobei der Milchbehälter an der wärmeleitenden Innenseite des Milchaufnahmebehälters eng, aber lösbar anliegt.

Zur Stromversorgung des Peltierelements kann der Gehäusesockel nach Anspruch 14 zweckmäßig einen Stromversorgungsanschluss sowie einen durch den einsetzbaren Milchbehälter betätigbaren Startkontakt aufweisen, mit dem die Stromversorgung des Peltierelements aktiviert wird, wenn der Milchbehälter in die Milchbehälteraufnahmekammer an dem Sockel eingesetzt wird. Damit wird eine weitgehend automatisierte Kühlung der Milch in dem Milchbehälter gesichert.

In einer Weiterbildung der Vorrichtung zur Bereitung von wahlweise kaltem oder warmem Milchschaum oder Abgabe wahlweise kalter oder warmer Milch ist gemäß Anspruch 4 an dem Gehäusesockel eine Spülflüssigkeitsbehälteraufnahmekammer fest angeordnet, die mit der Warmseite des Peltierelements flächig wärmeleitend verbunden ist, und in die Spülflüssigkeitsbehälteraufnahmekammer kann ein Flüssigkeitsbehälter geführt eingesetzt werden, der an seinem Boden ein Flüssigkeits-Steckventil aufweist, welches in eine komplementäre Spülflüssigkeitsventilaufnahme eingesteckt ist, wenn der Spülflüssigkeitsbehälter in die Spülflüssigkeitsbehälteraufnahmekammer eingesetzt ist. Die komplementäre Spülflüssigkeits-Steckventilaufnahme ist mit einem Spülflüssigkeitseingang eines Spülflüssigkeitsventilwegs fluidleitend verbunden, um Leitungen und Komponenten der Vorrichtung stromabwärts des Spülflüssigkeitsventilswegs im Bedarfsfall reinigen zu können. Da die Spülflüssigkeit energetisch günstig durch das für die Kühlung des Milchbehälters eingeschaltete Peltierelement erwärmt wird, ist mit einer guten Spül- und Reinigungswirkung der Spülflüssigkeit zu rechnen.

Die wärmeleitende Verbindung des Peltierelements einerseits mit der Milchbehälteraufnahmekammer und andererseits mit der Spülflüssigkeitsbehälteraufnahmekammer kann wirksam und konstruktiv einfach dadurch realisiert werden, dass das Peltierelement nach Anspruch 5 zwischen der Milchbehälteraufnahmekammer und der Spülflüssigkeitsbehälteraufnahmekammer wärmeleitend angeordnet ist.

In einer besonders kompakten Ausbildung der Vorrichtung zur Bereitung von wahlweise kaltem oder warmem Milchschaum oder Abgabe wahlweise kalter oder warmer Milch ist nach Anspruch 6 in dem Gehäusesockel der Vorrichtung ein Mehrwegeventil angeordnet, welches den Milchventilweg mit der komplementären Milch-Steckventilaufnahme an seinem Milcheingang, einen Luftventilweg, einen Mehrwegeventilausgang und einen Spülflüssigkeitsventilweg umfasst, über den eine Spülflüssigkeitsleitung auf den Mehrwegeventilausgang aufgeschaltet werden kann.

Das Mehrwegeventil ist insbesondere so ausgebildet, dass es in einer ersten Stellung den Mehrwegeventilausgang mit dem Milcheingang bzw. der Milch-Steckventilaufnahme verbindet oder in einer zweiten Stellung den Mehrwegeventilausgang mit dem Milcheingang und dem Lufteingang an einer Luftzuleitung verbindet, wodurch Luft mittels des durch die strömende Milch entstehenden Unterdrucks bzw. unter Einwirkung der Pumpe zur Milchschaumerzeugung der Milch zugesetzt wird. In einer dritten Stellung des Mehrwegeventils wird dessen Mehrwegeventilausgang mit dessen Spülflüssigkeitseingang verbunden, wodurch Spülflüssigkeit der Pumpe, der Kaltschäumvorrichtung, der Auslassleitung und dem Auslass zugeführt wird, da die Pumpe und die Kaltschäumvorrichtung strömungsmäßig zwischen dem Mehrwegeventilausgang und der Ausgangsleitung angeordnet sind.

Räumlich günstig sind in dem Gehäusesockel nach Anspruch 7 außer der Pumpe und der Kaltschäumvorrichtung elektrische Antriebsorgane des Mehrwegeventils und der Pumpe angeordnet und nach Anspruch 13 zweckmäßig auch deren interne Steuereinheiten.

Die Antriebsorgane können alternativ einfach manuell über eine Schaltvorrichtung angesteuert werden.

In Weiterbildung der internen Steuereinheiten können diese nach Anspruch 15 eine Schnittstelle zum drahtlosen oder drahtgebundenen Anschluss an eine zentrale Steuereinheit aufweisen, um die Antriebsorgane des Mehrwegeventils und der Pumpe zentral, insbesondere mit einer Steuereinheit eines Getränkezubereitungsgeräts zu steuern.

In der Vorrichtung zur Bereitung von wahlweise kaltem oder warmem Milchschaum oder Abgabe wahlweise kalter oder warmer Milch kann die Kaltschäumvorrichtung nach Anspruch 8 einfach als Drossel, insbesondere als Drosselstrecke ausgebildet sein.

In der Vorrichtung zur Bereitung von wahlweise kaltem oder warmem Milchschaum oder Abgabe von wahlweise kalter oder warmer Milch umfasst in einzigartiger Weise der Auslass an der Auslassleitung nach Anspruch 9 als wahlweise aktivierbare Mittel zum Erwärmen des in der Kaltschäumvorrichtung der Vorrichtung bereiteten Milchschaums bzw. der sie durchströmenden Milch eine Dampfheizeinrichtung mit einer Dampfgeneratorkoppelvorrichtung in einer solchen Ausbildung, dass der Auslass mit diesen geeignet ist, kalten Milchschaum bzw. kalte Milch, die in der Kaltschäumvorrichtung bereitet bzw. von dieser abgegeben wird, zu erwärmen, indem in die Dampfgeneratorkoppelvorrichtung Dampf von einem externen Dampfgenerator bzw. einer Dampfauslassleitung des Dampfgenerators eingespeist wird.

Ohne Anschluss der Dampfgeneratorkoppelvorrichtung an einen externen Dampfgenerator kann die Vorrichtung kalten Milchschaum bereiten bzw. kalte Milch abgeben. Die Vorrichtung kann hierzu als selbstständig nutzbares einfaches Aggregat verwendet werden. Zum Betrieb der Vorrichtung als eigenständiges Gerät im ungekoppelten Zustand, in dem von diesem kalter Milchschaum oder kalte Milch abgegeben werden kann, ist die Dampfgeneratorkoppelvorrichtung absperrbar, und zwar besonders zweckmäßig nach Anspruch 10 selbsttätig absperrbar, wenn die Dampfgeneratorkoppelvorrichtung von einem externen Dampfgenerator oder dessen Dampfleitung getrennt wird bzw. getrennt ist.

Wenn die Möglichkeit einer wahlweisen Bereitung warmen Milchschaums oder warmer Milch gewünscht wird, ist die Dampfgeneratorkoppelvorrichtung an einen externen Dampfgenerator bzw. eine Dampfauslassleitung anzuschließen, um gegebenenfalls die Dampfheizeinrichtung des Auslasses durch Dampfzufuhr zu aktivieren und damit den Milchschaum bzw. die Milch zu erwärmen, die dann aus dem Auslass abgegeben wird. Da die Erwärmung des Milchschaums bzw. der Milch erst in dem Auslass stattfindet, treten keine Wärmeverluste in der Auslassleitung ein. In der Vorrichtung ist somit zur Bereitung von warmem Milchschaum oder warmer Milch kein Dampferzeuger vorgesehen, vielmehr ist viel weniger aufwendig nur die Dampfgeneratorkoppelvorrichtung des Auslasses der Vorrichtung zur Ankopplung an den externen Dampfgenerator bzw. dessen Dampfauslassleitung vorhanden, die eine komplementäre Dampfgeneratorkoppelvorrichtung aufweist.

Mit anderen Worten, die Mittel zur Bereitung von warmem Milchschaum oder warmer Milch sind vollständig, wenn die Dampfgeneratorkoppelvorrichtung an einen externen Dampfgenerator unmittelbar oder mittelbar mit einem externen Dampfgenerator außerhalb der selbständig nutzbaren Vorrichtung gekoppelt ist. Zur Ausübung der Erwärmungsfunktion ist die Dampfgeneratorkoppelvorrichtung nicht mehr gesperrt, sondern offen.

Der Auslass bzw. dessen Dampfheizeinrichtung kann nach Anspruch 11 in unkomplizierter Weise als Mischer ausgebildet sein, in dem der eingespeiste kalte Milchschaum mit dem durch die Dampfgeneratorkoppelvorrichtung zugeführten Dampf gemischt wird und so das Gemisch direkt erwärmt wird.

Wenn jedoch der kalt zubereitete Milchschaum bzw. die kalte Milch nicht direkt mit dem heizenden Dampf in Berührung gelangen soll, um bei Erwärmung in seiner stofflichen Zusammensetzung möglichst unverändert zu bleiben, ist es statt der Ausbildung als Mischer auch möglich, gemäß Anspruch 12 die Dampfheizeinrichtung des Auslasses als einen mit dem extern erzeugten Dampf beheizten Wärmetauscher zu gestalten, der von dem kalt bereiteten Milchschaum bzw. der kalten Milch durchströmt wird.

Besonders vorteilhaft wird die separate Vorrichtung zur Bereitung von wahlweise kaltem oder warmem Milchschaum oder Abgabe wahlweise kalter oder warmer Milch in Verbindung mit einem Getränkezubereitungsgerät, insbesondere Kaffeegetränkezubereitungsgerät, nach Anspruch 16 eingesetzt, wozu die Dampfgeneratorkoppelvorrichtung des Auslasses der Vorrichtung zur Bereitung von wahlweise kaltem oder warmem Milchschaum oder Abgabe wahlweise kalter oder warmer Milch an eine mit einem Dampfventil versehene Dampfauslassleitung des Dampfgenerators des Getränkezubereitungsgeräts angekoppelt wird. Wenn die Dampfgeneratorkoppelvorrichtung angekoppelt ist, kann der in dem Getränkezubereitungsgerät vorhandene Dampferzeuger auch zur Erzeugung warmem Milchschaums bzw. warmer Milch genutzt werden, wenn der Dampfgenerator eingeschaltet ist und das Dampfventil der Dampfauslassleitung, die an die Vorrichtung gekoppelt ist, gesteuert geöffnet wird.

Durch die Zufuhr des mit einem externen leistungsfähigen Dampferzeuger erzeugten Dampfs über die Dampfgeneratorkoppelvorrichtung in die Dampfheizeinrichtung des Auslasses der Vorrichtung zur Bereitung von wahlweise kaltem oder warmem Milchschaum oder wahlweise kalter oder warmer Milch kann der Auslass auch aus kalter Milch erzeugten Milchschaum oder kalte Milch, die zuvor gekühlt war, ausreichend erwärmen.

Die zentrale Steuereinheit des Getränkezubereitungsgeräts steuert zweckmäßig auch ein steuerbares Dampfventil in einer Dampfauslassleitung des Dampfgenerators des Getränkezubereitungsgeräts oder den Dampfgenerator selbst, wobei die Dampfauslassleitung an die die Dampfgeneratorkoppelvorrichtung der Vorrichtung zur Bereitung von wahlweise kaltem oder warmem Milchschaum oder wahlweise kalter oder warmer Milch ankoppelbar ist. Bei angekoppelter Dampfgeneratorkoppelvorrichtung und geöffnetem Dampfventil wird der Dampfgenerator, an den die Dampfauslassleitung angeschlossen ist, in dem Getränkezubereitungsgerät zur Bereitung von warmem Milchschaum oder warmer Milch effizient genutzt.

Die Ankopplung der Dampfgeneratorkoppelvorrichtung an die Dampfauslassleitung des Getränkezubereitungsgeräts kann auch mittelbar über eine übliche Schäumvorrichtung des Getränkezubereitungsgeräts erfolgen.

Ein Ausführungsbeispiel der Erfindung wird im Folgenden anhand einer Zeichnung mit einer Figur erläutert, woraus die Merkmale der Erfindung erkennbar sind. Es zeigt in schematischer Darstellung:

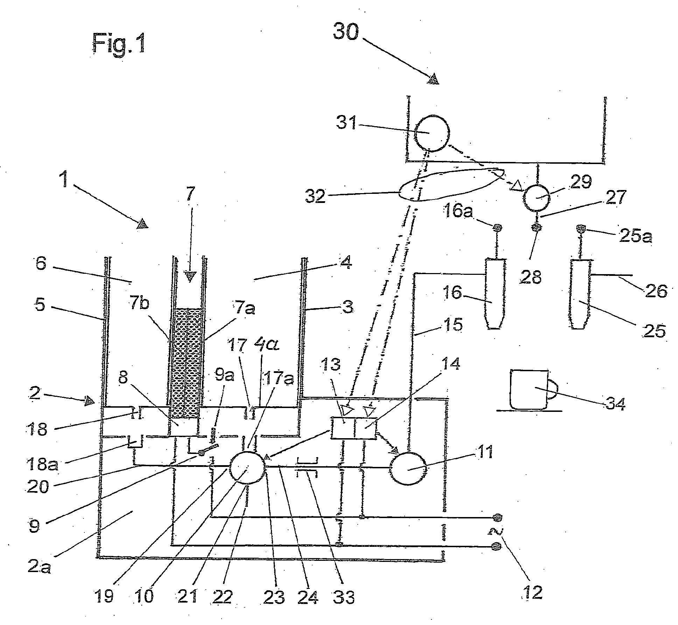

- Fig.1: eine Vorrichtung zur Bereitung von wahlweise kaltem oder warmem Milchschaum oder Abgabe wahlweise kalter oder warmer Milch in einem mit einem Getränkezubereitungsgerät steuerungsmäßig verbundenen, jedoch fluidmäßig un-verbundenen Zustand vor Betriebsbereitschaft.

In Fig. 1 ist die Vorrichtung zur Bereitung von wahlweise kaltem oder warmem Milchschaum oder Abgabe wahlweise kalter oder warmer Milch allgemein mit 1 bezeichnet.

Sie umfasst eine Gehäuseeinheit 2 mit einem Gehäusesockel 2a, auf dem eine Milchbehälteraufnahmekammer 3 und eine Spülflüssigkeitsbehälteraufnahmekammer 5 ein Peltierelement 7 zwischen sich einschließen, so dass eine Kaltseite 7a des Peltierelements mit der Milchbehälteraufnahmekammer 3 flächig wärmeleitend verbunden ist und eine Warmseite 7b des Peltierelements an einer Spülflüssigkeitsbehälteraufnahmekammer 5 flächig wärmeleitend anliegt. Ansonsten ist der Milchaufnahmebehälter 3 von dem Spülflüssigkeitsbehälter 6 thermisch isoliert.

In die Milchaufnahmekammer 3 ist ein Milchbehälter 4 von oben bis zu einer unteren Endstellung einsetzbar, über der der Milchbehälter 4 in Fig. 1 dargestellt ist. In der unteren Endstellung des Milchbehälters 4 ragt ein Milch-Steckventil 17, welches in dem Boden 4a des Milchbehälters 4 angeordnet ist, in eine komplementäre Milch-Steckventilaufnahme 17a, die direkt als Milcheingang an einem in Fig. 1 nicht dargestellten Milchventilweg des Mehrwegeventils 10 fungiert.

Der Spülflüssigkeitsbehälter 6 ist von oben in die Spülflüssigkeitsbehälteraufnahmekammer 5 eingeführt. An seinem Boden weist der Spülflüssigkeitsbehälter 6 ein Spülflüssigkeits-Steckventil 18 auf, welches in der nicht in Fig. 1 dargestellten unteren Endstellung des Spülflüssigkeitsbehälters 6 in eine Spülflüssigkeits-Steckventilaufnahme 18a eingesteckt und eingerastet ist. Von der Spülflüssigkeits-Steckventilaufnahme 18a führt eine Spülflüssigkeitsleitung 20 zu einem Spülflüssigkeitseingang 19 des Mehrwegeventils 10.

Der Spülflüssigkeitsbehälter 6 liegt an einer Innenseite der Spülflüssigkeitsbehälteraufnahmekammer 5 an, so dass Wärme von einer Peltierelement Warmseite 7b des Peltierelements 7 großflächig auf den Spülflüssigkeitsbehälter 6 übertragen wird, der mit seinem Inhalt erwärmt wird. Gleichzeitig wird die Kaltseite 7a des Peltierelements 7 kalt und der Milchbehälter 4 mit seinem Inhalt wird gekühlt. Im Bedarfsfall können der Milchbehälter 4 aus der Milchbehälteraufnahmekammer 3 und der Spülflüssigkeitsbehälter 6 aus der Spülflüssigkeitsbehälteraufnahmekammer 5 nach oben entnommen werden.

Das Mehrwegeventil 10 mit der als Milcheingang fungierenden Milch-Steckventilaufnahme 17a, mit dem Spülflüssigkeitseingang 19, mit einem Lufteingang 21, der mit einer Luftleitung 22 verbunden ist, und mit einem Mehrwegeventilausgang 23 ist fest in dem Gehäusesockel 2a der Gehäuseeinheit 2 angeordnet.

Von dem Mehrwegeventilausgang 23 führt eine Mehrwegeventilausgangsleitung 24 zu einer als Saugpumpe ausgebildeten Pumpe 11, die ebenfalls in dem Gehäusesockel fest angeordnet ist. In die Mehrwegeventilausgangsleitung 24 ist eine Drossel 33 eingefügt. Die Drossel 33 hat eine Funktion zur Kaltmilchschaumbereitung, wenn ihr von dem Mehrwegeventil 10 mittels der Pumpe 11 mit Luft durchsetzte Milch zugeführt wird.

Der Gehäusesockel 2a beinhaltet weiterhin nicht bezeichnete elektrische Antriebsorgane des Mehrwegeventils 10 und der Pumpe 11 sowie interne Steuereinheiten 13 und 14 des Mehrwegeventils 10 bzw. der Pumpe 11, mit denen diese einstellbar bzw. einschaltbar sind.

Zur Stromversorgung des Peltierelements 7 weist der Gehäusesockel 2a einen Stromversorgungsanschluss 12 auf, der auch die Steuereinheiten 13, 14 für Antriebsorgane des Mehrwegeventils 10 und der Pumpe 11 mit Strom versorgt. Die Stromversorgung des Peltierelements 7 erfolgt nur in dem in die Endstellung abgesenkten Zustand des in der Milchbehälteraufnahmekammer 3 gekühlten Milchbehälters 4 durch Schließen eines Startkontakts 9 mittels eines Betätigungselements 9a, welches in dem vorliegenden Beispiel als Stößel ausgebildet ist.

Mit dem Peltierelement 7 kann in einem Kühlschrank vorgekühlte Milch in dem in die Milchbehälteraufnahmekammer 3 eingesetzten Milchbehälter 4 zusätzlich gekühlt werden, wobei gleichzeitig Spülflüssigkeit in dem Spülflüssigkeitsbehälter 6, der in die Spülflüssigkeitsbehälteraufnahmekammer 5 eingesetzt ist, zur guten Spül- bzw. Reinigungswirkung erwärmt werden kann.

An einen Druckausgang der Pumpe 11 in dem Gehäusesockel 2a ist eine Auslassleitung 15 angeschlossen, die zu einem außerhalb des Gehäusesockels 2a angeordneten Auslass 16 führt. Der Auslass 16 umfasst eine Dampfheizeinrichtung, die mit einer absperrbaren Dampfgeneratorkoppelvorrichtung 16a verbunden ist.

Die Dampfgeneratorkoppelvorrichtung 16a kann mit einer komplementären Dampfgeneratorkoppelvorrichtung 28 eines Getränkezubereitungsgeräts 30 gekoppelt werden, die über ein Dampfventil 35 von einer Dampfleitung 34 mit Dampf aus einem Dampfgenerator in dem Getränkezubereitungsgerät 30 beaufschlagt werden kann.

Der Auslass 16 dient in der Konfiguration der Vorrichtung 1 gemäß Figur 1, in der an die Dampfgeneratorkoppelvorrichtung 16a keine externe Dampfauslassleitung angekoppelt ist und die Dampfgeneratorkoppelvorrichtung 16a abgesperrt ist, als Ausgabevorrichtung für kalte Milch oder kalten Milchschaum.

Wenn hingegen die Dampfgeneratorkoppelvorrichtung 16a an die komplementäre Dampfgeneratorkoppelvorrichtung 28 angekoppelt ist, selbst geöffnet ist und bei geöffnetem Dampfventil 29 mit der Dampfauslassleitung 27 dampfleitend verbunden ist, kann der in dem Dampfgenerator des Getränkezubereitungsgeräts 30 erzeugte Heißdampf in den mit der Dampfheizeinrichtung versehenen Auslass 16 strömenden kalten Milchschaum, der in der Vorrichtung 1 bereitet wurde, oder kalte Milch wirkungsvoll direkt oder indirekt erwärmen. Zur Abgabe von kaltem Milchschaum oder kalter Milch aus dem Auslass 16 hingegen ist das Dampfventil 29 geschlossen.

Zweckmäßig werden das Dampfventil 29 in der Dampfauslassleitung 27 und die Steuereinheiten 13, 14 des Mehrwegeventils 10 und der Pumpe 11 von einer zentralen Steuereinheit 31 des Getränkezubereitungsgeräts 30 über Steuerverbindungen 32 angesteuert, die durch Leitungen oder drahtlos realisiert sein können und in Fig. 1 mit unterbrochenen Linien angedeutet sind. Hierzu können die internen Steuereinheiten 13, 14 der Vorrichtung 1 eine Schnittstelle aufweisen, über die sie über die Steuerverbindungen 32 mit der externen Steuereinheit 31 kommunizieren.

Das ebenfalls von der zentralen Steuereinheit 31 steuerbare Mehrwegeventil 10 in dem Gehäusesockel 2a weist außer der Milch-Steckventilaufnahme 17a bzw. dem Milcheingang einen Lufteingang 21 mit der Luftleitung 22 und einen Spülflüssigkeitseingang 19 mit der Spülflüssigkeitsleitung 20 auf, die zu der Spülflüssigkeits-Steckventilaufnahme 18a führt.

Zur Inbetriebnahme der Vorrichtung wird durch Einsetzen des Milchbehälters 4 in die Milchbehälteraufnahmekammer 3 das Steckventil 17 an dem Milchbehälterboden in die Milch-Steckventilaufnahme 17 als Milcheingang an dem Mehrwegeventil 10 gesteckt und verrastet. Außerdem wird durch den eingesetzten Milchbehälter 4 der Startkontakt 9 mittels des Betätigungselements 18a, nämlich mittels des Stößels geschlossen.

Wenn dann das Mehrwegeventil 10 durch seine Steuereinheit 13 und sein Antriebsorgan in seine erste Stellung gestellt ist, steht der Milcheingang bzw. die Milch-Steckventilaufnahme 18a mit dem Mehrwegeventilausgang 23 in Verbindung, wobei der Lufteingang 21 und der Spülflüssigkeitseingang 19 gesperrt sind. Die von der Pumpe 11 angesaugte Milch wird aus dem Mehrwegeventilausgang 23 und den Milchventilweg des Mehrwegeventils 10 gesaugt und dem Auslass 15 als pure Milch zugeführt.

Wenn hingegen das Mehrwegeventil 10 durch seine Steuereinheit 13 gesteuert durch sein Antriebsorgan in eine zweite Stellung eingestellt ist, bleibt die Milch-Steckventilaufnahme 17a bzw. der Milcheingang mit dem Mehrwegeventilausgang 23 verbunden und der Lufteingang 21 ist geöffnet, der mit dem Milchventilweg, auch als Milchströmungspfad bezeichnet, in Verbindung steht. Dadurch wird außer der durch die Pumpe 11 angesaugten Milch in dem Mehrwegeventil 10 auch Luft angesaugt und der Milch beigemengt. Das entstehende Milch-Luftgemisch wird von der Pumpe 11 weiter durch die zwischen dem Mehrwegeventilausgang 23 und dem Auslass 16 angeordnete Drossel 33 gepumpt, die in dem vorliegenden Ausführungsbeispiel stromaufwärts der Pumpe 11 angeordnet ist. Das in der Drossel 33 komprimierte Milch-Luftgemisch expandiert stromabwärts der Drossel und Milchschaum wird durch die Auslassleitung 15 dem Auslass 16 zugeführt.

In einer dritten durch die Steuereinheit 13 und das Antriebsorgan des Mehrwegeventils 10 gesteuerten Stellung sind die Milch-Steckventilaufnahme 17a bzw. der Milcheingang und der Lufteingang 21 gesperrt, während der Spülflüssigkeitseingang 19 geöffnet ist und die Spülflüssigkeitsleitung 20 über einen Spülflüssigkeitsventilweg auf den Mehrwegeventilausgang 23 aufgeschaltet ist. Unter der Voraussetzung, dass zuvor mit dem Spülflüssigkeitsbehälter 6 Spülflüssigkeit in die Spülflüssigkeitsbehälteraufnahmekammer 5 eingeführt wurde, wodurch das Spülflüssigkeits-Steckventil 18 in die Spülflüssigkeits-Steckventilaufnahme 18a eingesteckt wurde und das Spülflüssigkeits-Steckventil 18 mit der Spülflüssigkeits-Steckventilaufnahme 18a verrastet wurde, saugt die Pumpe 11 Spülflüssigkeit durch das Mehrwegeventil 10 und fördert die Spülflüssigkeit durch die Mehrwegeventilausgangsleitung 23, die Drossel 33, die Pumpe 11 und die Auslassleitung 15 zu dem Auslass 16.

Die Ventilstellungen des Mehrwegeventils 10 und der Betrieb der Pumpe 11 können in einer Variante der Vorrichtung 1 zur Bereitung von Milchschaum auch unabhängig von einem Getränkezubereitungsgerät mittels der internen Steuereinheiten 13, 14 für das Mehrwegeventil 10 und die Pumpe 11 über eine nicht dargestellte Schaltanordnung manuell angewählt werden.

Wie in Fig. 1 dargestellt, braucht der Auslass 16 der Vorrichtung 1 zur Kaltschaumbereitung bzw. Abgabe kalter Milch mit keiner externen Dampfauslassleitung 27 bzw. keinem Dampfgenerator verbunden zu sein. Sie kann aber zur Kaltschaumbereitung bzw. Abgabe kalter Milch an die Dampfauslassleitung 27 angeschlossen bleiben, wenn das Dampfauslassventil 29 durch die zentrale Steuereinheit 31 geschlossen ist bzw. der Dampfgenerator inaktiv ist.

Zur Zubereitung warmen Milchschaums bzw. warmer Milch muss hingegen der Auslass 16 über dessen Dampfgeneratorkoppelvorrichtung 16a an eine Dampfauslassleitung z.B. 27 bzw. einen Dampfgenerator funktionell angekoppelt sein, so dass in dem vorliegenden Beispiel von der Dampfauslassleitung 27 Dampf über das gesteuerte Dampfauslassventil 29 in den Auslass 16 eingespeist wird. In Fig. 1 ist angedeutet, dass der Auslass 16 der Vorrichtung 1 mit seiner Dampfgeneratorkoppelvorrichtung 16a an die komplementäre Dampfgeneratorkoppelvorrichtung 28 des Getränkezubereitungsgeräts 30 im Austausch zu einem konventionellen Schäumer 25 angekoppelt werden kann, der eine Dampfgeneratorkoppelvorrichtung 25a und eine Schäumer-Milchleitung 26 aufweist und ausschließlich heißen Milchschaum abgeben kann.

Der nach einer der obigen Verfahrensalternativen hergestellte Milchschaum bzw. die abgegebene Milch kann durch einen Auffangbehälter unter dem Auslass 16 oder Schäumer 25 aufgenommen werden.

### Bezugszeichenliste

- 1: Vorrichtung zur Bereitung von Milchschaum
- 2: Gehäuseeinheit
- 2a: Gehäusesockel
- 3: Milchbehälteraufnahmekammer
- 4: Milchbehälter
- 4a: Boden
- 5: Spülflüssigkeitsbehälteraufnahmekammer
- 6: Spülflüssigkeitsbehälter
- 7: Peltierelement
- 7a: Peltierelement Kaltseite
- 7b: Peltierelement Warmseite
- 8: Peltierelement Stromversorgung
- 9: Startkontakt
- 9a: Betätigungselement (Stößel)
- 10: Mehrwegeventil
- 11: Pumpe
- 12: Stromversorgungsanschluss
- 13: Steuereinheit Mehrwegeventil
- 14: Steuereinheit Pumpe
- 15: Auslassleitung
- 16: Auslass
- 16a: Dampfgeneratorkoppelvorrichtung
- 17: Milch-Steckventil
- 17a: Milch-Steckventilaufnahme
- 18: Spülflüssigkeits-Steckventil
- 18a: Spülflüssigkeits-Steckventilaufnahme
- 19: Spülflüssigkeitseingang
- 20: Spülflüssigkeitsleitung
- 21: Lufteingang
- 22: Luftleitung
- 23: Mehrwegeventilausgang
- 24: Mehrwegeventilausgangsleitung
- 25: Schäumer
- 26: Schäumer-Milchleitung
- 27: Dampfauslassleitung
- 28: komplementäre Dampfgeneratorkoppelvorrichtung
- 29: Dampfventil
- 30: Getränkezubereitungsgerät
- 31: zentrale Steuereinheit
- 32: Steuerverbindungen
- 33: Drossel
- 34: Auffangbehälter

## Patentansprüche

1. Vorrichtung zur Bereitung von wahlweise kaltem oder warmem Milchschaum oder Abgabe wahlweise kalter oder warmer Milch (1), umfassend
einen aus der Vorrichtung entnehmbaren Milchbehälter (4),
einen Milcheinlass, welcher den Milchbehälter (4) über einen Milchventilweg mit einer über einen Luftventilweg aktivierbaren Kaltschäumvorrichtung verbindet,
eine stromabwärts der Kaltschäumvorrichtung angeordnete Auslassleitung (15) mit einem Auslass (16) sowie gegebenenfalls wahlweise aktivierbare Mittel zum Erwärmen des in der Kaltschäumvorrichtung bereiteten Milchschaums bzw. der die Kaltschäumvorrichtung durchströmenden Milch,
**dadurch gekennzeichnet,**
**dass** der Milchbehälter (4) in die Vorrichtung (1) geführt einsetzbar ist und an seinem Boden (4a) ein Milch-Steckventil (17) aufweist,
**dass** eine komplementäre Milch-Steckventilaufnahme (17a), die in der Vorrichtung (1) fest angeordnet ist, als Milcheingang direkt an dem Milchventilweg dergestalt ausgebildet ist,
**dass** bei Einsetzen des Milchbehälters (4) das Milch-Steckventil (17) in die komplementäre Milch-Steckventilaufnahme (17a) einsteckbar ist und in dieser einrastbar ist.

2. Vorrichtung nach Anspruch 1,
**dadurch gekennzeichnet,**
**dass** die Vorrichtung (1) einen Gehäusesockel (2) umfasst, auf dem eine Milchbehälteraufnahmekammer (6) fest angeordnet ist, und
**dass** der Milchbehälter (4) in die Milchbehälteraufnahmekammer (6) dergestalt von oben geführt einsetzbar ist, dass das Milch-Steckventil (17) an dem Boden (4a) des Milchbehälters (4) in die komplementäre Milch-Steckventilaufnahme (17a) eingesteckt wird und in dieser einrastet.

3. Vorrichtung nach Anspruch 2,
**dadurch gekennzeichnet,**
**dass** die Milchbehälteraufnahmekammer (3) mit der Kaltseite (7a) eines Peltierelements (7) flächig wärmeleitend verbunden ist und
**dass** der Milchbehälter (4) eng, aber lösbar an einer wärmeleitenden Innenseite der Milchbehälteraufnahmekammer (3) anliegt.

4. Vorrichtung nach den Ansprüchen 1 und 2,
**dadurch gekennzeichnet,**
**dass** an dem Gehäusesockel (2) eine Spülflüssigkeitsbehälteraufnahmekammer (5) fest angeordnet ist, die mit der Warmseite (7b) des Peltierelements (7) flächig wärmeleitend verbunden ist,
**dass** in die Spülflüssigkeitsbehälteraufnahmekammer (5) ein Spülflüssigkeitsbehälter (6), der an seinem Boden ein Spülflüssigkeits-Steckventil (18) aufweist, dergestalt geführt einsetzbar ist, dass das Spülflüssigkeits-Steckventil (18) in eine komplementäre Spülflüssigkeits-Steckventilaufnahme (18a) einsteckbar ist, die mit einem Spülflüssigkeitseingang (19) eines Spülflüssigkeitsventilwegs fluidleitend verbunden ist.

5. Vorrichtung nach den Ansprüchen 3 und 4,
**dadurch gekennzeichnet,**
**dass** das Peltierelement (7) zwischen der Milchbehälteraufnahmekammer (3) und Spülflüssigkeitsbehälteraufnahmekammer (6) an diesen wärmeleitend angeordnet ist.

6. Vorrichtung nach den Ansprüchen 1 - 5,
**dadurch gekennzeichnet,**
**dass** in dem Gehäusesockel (2a) ein Mehrwegeventil (10) angeordnet ist, welches den Milchventilweg mit der komplementären Milch-Steckventilaufnahme (17a) an seinem Milcheingang, einen Luftventilweg, einen Mehrwegeventilausgang (23) und einen Spülflüssigkeitsventilweg umfasst, über den eine Spülflüssigkeitsleitung (20) auf den Mehrwegeventilausgang (23) aufschaltbar ist.

7. Vorrichtung nach Anspruch 6,
**dadurch gekennzeichnet,**
**dass** in dem Gehäusesockel (2a) strömungsmäßig zwischen dem Mehrwegeventilausgang (23) und einer Auslassleitung (15) die Kaltschäumvorrichtung und eine Pumpe (11) angeordnet sind und
**dass** in dem Gehäusesockel (2a) elektrische Antriebsorgane des Mehrwegeventils (10) und der Pumpe (11) angeordnet sind.

8. Vorrichtung nach einem der vorangehenden Ansprüche,
**dadurch gekennzeichnet,**
**dass** als Kaltschäumvorrichtung eine Drossel (33) vorgesehen ist.

9. Vorrichtung nach einem der vorangehenden Ansprüche,
**dadurch gekennzeichnet,**
**dass** der Auslass (16) eine Dampfheizeinrichtung mit einer absperrbaren Dampfgeneratorkoppelvorrichtung (16a) umfasst, mit denen der Auslass (16) geeignet ist, in der Kaltschäumvorrichtung bereiteten kalten Milchschaum bzw. aus dieser strömende Milch zu erwärmen.

10. Vorrichtung nach Anspruch 9,
**dadurch gekennzeichnet,**
**dass** die Dampfgeneratorkoppelvorrichtung (16a) im ungekoppelten Zustand selbsttätig absperrbar ausgebildet ist.

11. Vorrichtung nach Anspruch 9 oder 10,
**dadurch gekennzeichnet,**
**dass** der Auslass (16) als Dampfheizeinrichtung eine Mischvorrichtung des aus der Kaltschäumvorrichtung strömenden Milchschaums bzw. der Milch mit Dampf aufweist.

12. Vorrichtung nach Anspruch 9 oder 10,
**dadurch gekennzeichnet,**
**dass** der Auslass (16) als Dampfheizeinrichtung einen mit Dampf beheizten Wärmetauscher aufweist.

13. Vorrichtung nach Anspruch 7,
**dadurch gekennzeichnet,**
**dass** in dem Gehäusesockel (2a) interne Steuereinheiten (13, 14) der elektrischen Antriebsorgane des Mehrwegeventils (10) und der Pumpe (11) angeordnet sind.

14. Vorrichtung nach Anspruch 7,
**dadurch gekennzeichnet,**
**dass** in dem Gehäusesockel (2a) ein Stromversorgungsanschluss (39) sowie ein durch den einsetzbaren Milchbehälter (4) betätigbarer Startkontakt (9) angeordnet sind, mit dem eine Stromversorgung des Peltierelements (7) aktivierbar ist

15. Vorrichtung nach Anspruch 13,
**dadurch gekennzeichnet,**
**dass** die internen Steuereinheiten (13, 14) eine Schnittstelle zum drahtlosen oder drahtgebundenen Anschluss an eine zentrale Steuereinheit (31) aufweisen.

16. Getränkezubereitungsgerät, insbesondere Kaffeegetränkezubereitungsgerät mit einem Dampfgenerator, das eine Vorrichtung (1) zur Bereitung von wahlweise kaltem oder warmem Milchschaum oder wahlweise kalter oder warmer Milch nach einem der vorangehenden Ansprüche umfasst, **dadurch gekennzeichnet,**
**dass** die Dampfgeneratorkopplervorrichtung (16a) der Vorrichtung (1) an eine mit einem steuerbaren Dampfventil (29) versehene Dampfauslassleitung (27) des Dampfgenerators ankoppelbar ist.

17. Getränkezubereitungsgerät nach Anspruch 16,
**dadurch gekennzeichnet,**
**dass** die zentrale Steuereinheit (31) Bestandteil des Getränkezubereitungsgeräts (30) ist und,
**dass** an die zentrale Steuereinheit (31) ein Bestätigungsorgan des Dampfventils (29) angeschlossen ist.

## Claims

1. A device for preparing optionally cold or warm milk froth or for dispensing optionally cold or warm milk (1), comprising
a milk container (4) that can be removed from the device,
a milk inlet which connects the milk container (4) via a milk valve channel to a cold-frothing device that can be activated via an air valve channel,
an outlet line (15) arranged downstream from the cold-frothing device, with an outlet (16) and, as needed,
optionally activatable means for heating the milk froth prepared in the cold-frothing device or the milk flowing through the cold-frothing device,
**characterised in that**
the milk container (4) can be inserted in a guided manner into the device (1) and has on its bottom (4a) a milk plug valve (17),
**in that** a complementary milk plug valve receptacle (17a) that is firmly arranged in the device (1) is embodied as a milk inlet directly at the milk valve channel such that,
upon insertion of the milk container (4), the milk plug valve (17) can be plugged into the complementary milk plug valve receptacle (17a) and can be locked therein.

2. The device according to claim 1,
**characterised in that**
the device (1) comprises a housing base (2) on which a milk container holding chamber (6) is permanently arranged, and
**in that** the milk container (4) can be inserted from above in a guided manner into the milk container holding chamber (6) such that the milk plug valve (17) on the bottom (4a) of the milk container (4) is plugged into the complementary milk plug valve receptacle (17a) and engages therein.

3. The device according to claim 2,
**characterised in that**
the milk container holding chamber (3) is connected in a planar, thermally conductive manner to the cold side (7a) of a Peltier element (7) and
**in that** the milk container (4) rests tightly but detachably against a thermally conductive inner side of the milk container holding chamber (3).

4. The device according to claims 1 and 2,
**characterised in that**
a rinsing fluid container holding chamber (5) is firmly arranged on the housing base (2) and is connected in a planar, thermally conductive manner to the warm side (7b) of the Peltier element (7), **in that** a rinsing fluid container (6) having a rinsing fluid plug valve (18) on its bottom can be inserted in a guided manner into the rinsing fluid container holding chamber (5) such that the rinsing fluid plug valve (18) can be plugged into a complementary rinsing fluid plug valve receptacle (18a) that is connected in a fluidly conductive manner to a rinsing fluid inlet (19) of a rinsing fluid valve channel.

5. The device according to claims 3 and 4,
**characterised in that**
the Peltier element (7) is arranged in a thermally conductive manner between the milk container holding chamber (3) and the rinsing fluid container holding chamber (6).

6. The device according to any one of the claims 1 to 5, **characterised in that**
in the housing base (2a), a manifold valve (10) is arranged which comprises the milk valve channel with the complementary milk plug valve receptacle (17a) at its milk inlet, an air valve channel, a manifold valve outlet (23) and a rinsing fluid valve channel via which a rinsing fluid line (20) can be connected to the manifold valve outlet (23).

7. The device according to claim 6,
**characterised in that**
the cold-frothing device and a pump (11) are arranged in terms of flow in the housing base (2a) between the manifold valve outlet (23) and an outlet line (15) and
**in that** electrical drive members of the manifold valve (10) and of the pump (11) are arranged in the housing base (2a).

8. The device according to any one of the preceding claims,
**characterised in that**
a restrictor (33) is provided as the cold-frothing device.

9. The device according to any one of the preceding claims, **characterised in that**
the outlet (16) comprises a steam-heating device with a lockable steam generator coupling device (16a) with which the outlet (16) is capable of heating cold milk froth prepared in the cold-frothing device or milk flowing out of it.

10. The device according to claim 9,
**characterised in that**
the steam generator coupling device (16a) is embodied so as to be automatically lockable in the uncoupled state.

11. The device according to claim 9 or 10,
**characterised in that**
the outlet (16) has, as a steam-heating device, a mixing device for mixing the milk froth flowing out of the cold-frothing device or the milk with steam.

12. The device according to claim 9 or 10,
**characterised in that**
the outlet (16) has, as a steam-heating device, a steam-heated heat exchanger.

13. The device according to claim 7,
**characterised in that**
internal control units (13, 14) of the electrical drive members of the manifold valve (10) and of the pump (11) are arranged in the housing base (2a).

14. The device according to claim 7,
**characterised in that**
a power supply connection (39) as well as a start contact (9) that can be actuated by the insertable milk container (4) are arranged in the housing base (2a) with which start contact a power supply of the Peltier element (7) can be activated.

15. The device according to claim 13,
**characterised in that**
the internal control units (13, 14) have an interface for wireless or wired connection to a central control unit (31).

16. A beverage preparation device, in particular a coffee beverage preparation device with a steam generator, which comprises a device (1) for preparing optionally cold or warm milk froth or optionally cold or warm milk according to any one of the preceding claims,
**characterised in that**
the steam generator coupling device (16a) of the device (1) can be connected to a steam outlet line (27) of the steam generator provided with a controllable steam valve (29).

17. The beverage preparation device according to claim 16,
**characterised in that**
the central control unit (31) is a component of the beverage preparation device (30) and
**in that** an actuating member of the steam valve (29) is connected to the central control unit (31).

## Revendications

1. Dispositif pour préparer de la mousse de lait au choix froide ou chaude ou pour distribuer du lait (1) au choix froid ou chaud, comprenant
un récipient (4) de lait qui peut être retiré du dispositif,
une entrée de lait qui relie, à travers un canal de soupape de lait, le récipient (4) de lait à un dispositif de moussage à froid activable via un canal de soupape d'air,
une conduite (15) de sortie disposée en aval du dispositif de moussage à froid, ayant une sortie (16), ainsi que, le cas échéant, des moyens activables au choix pour chauffer de la mousse de lait préparée dans le dispositif de moussage à froid ou du lait passant par le dispositif de moussage à froid,
**caractérisé en ce que**
le récipient (4) de lait peut être placé de manière guidée dans le dispositif (1) et présente sur son fond (4a) une soupape (17) de lait enfichable,
**en ce qu'**un logement (17a) de soupape de lait enfichable qui est complémentaire, et qui est disposé de manière solidaire dans le dispositif (1), se présente sous la forme d'une entrée de lait directement sur le canal de soupape de lait de sorte que,
lors de la mise en place du récipient (4) de lait, la soupape (17) de lait enfichable peut être enfichée dans le logement (17a) de soupape de lait enfichable complémentaire et peut être enclenchée dans celui-ci.

2. Dispositif selon la revendication 1,
**caractérisé en ce que**
le dispositif (1) comprend un socle (2) de boîtier sur lequel une chambre (6) de logement de récipient de lait est disposée de manière solidaire et
**en ce que** le récipient (4) de lait peut être placé dans la chambre (6) de logement de récipient de lait par le haut de manière guidée de sorte que la soupape (17) de lait enfichable, sur le fond (4a) du récipient (4) de lait, est enfichée dans le logement (17a) de soupape de lait enfichable complémentaire et est enclenchée dans celui-ci.

3. Dispositif selon la revendication 2,
**caractérisé en ce que**
la chambre (3) de logement de récipient de lait est reliée au côté froid (7a) d'un élément (7) Peltier sur toute la surface de manière thermoconductrice et
**en ce que** le récipient (4) de lait repose contre un côté intérieur thermoconducteur de la chambre (3) de logement de récipient de lait étroitement, tout en étant amovible.

4. Dispositif selon l'une quelconque des revendications 1 et 2,
**caractérisé en ce qu'**
une chambre (5) de logement de récipient de liquide de rinçage est disposée de manière solidaire sur le socle (2) de boîtier et est reliée au côté chaud (7b) de l'élément (7) Peltier sur toute la surface de manière thermoconductrice,
**en ce qu'**un récipient (6) de liquide de rinçage qui présente une soupape (18) enfichable de liquide de rinçage sur son fond peut être placé dans la chambre (5) de logement de récipient de liquide de rinçage de manière guidée de sorte que la soupape (18) enfichable de liquide de rinçage peut être enfichée dans un logement (18a) de soupape enfichable de liquide de rinçage complémentaire qui est relié à une entrée (19) de liquide de rinçage d'un canal de soupape de liquide de rinçage de manière conductrice de fluide.

5. Dispositif selon l'une quelconque des revendications 3 et 4,
**caractérisé en ce que**
l'élément (7) Peltier est disposé de manière thermoconductrice entre la chambre (3) de logement de récipient de lait et la chambre (6) de logement de récipient de liquide de rinçage.

6. Dispositif selon l'une quelconque des revendications 1 à 5,
**caractérisé en ce que**
dans le socle (2a) de boîtier, une soupape (10) à plusieurs voies est disposée qui comprend le canal de soupape de lait avec le logement (17a) de soupape enfichable de lait complémentaire sur son entrée de lait, un canal de soupape d'air, une sortie (23) de soupape à plusieurs voies et un canal de soupape de liquide de rinçage, une conduite (20) de liquide de rinçage pouvant être raccordée à la sortie (23) de soupape à plusieurs voies via ledit canal de soupape de liquide de rinçage.

7. Dispositif selon la revendication 6,
**caractérisé en ce que**
le dispositif de moussage à froid et une pompe (11) sont disposés en termes d'écoulement dans le socle (2a) de boîtier entre la sortie (23) de soupape à plusieurs voies et une conduite (15) de sortie et
**en ce que** des organes de commande électriques de la soupape (10) à plusieurs voies et de la pompe (11) sont disposés dans le socle (2a) de boîtier.

8. Dispositif selon l'une quelconque des revendications précédentes,
**caractérisé en ce qu'**
un piège (33) est prévu comme le dispositif de moussage à froid.

9. Dispositif selon l'une quelconque des revendications précédentes,
**caractérisé en ce que**
la sortie (16) comprend une unité de chauffage à vapeur avec un dispositif (16a) de couplage de générateur de vapeur verrouillable qui rendent la sortie (16) appropriée pour chauffer de la mousse de lait froide préparée dans le dispositif de moussage à froid ou du lait passant de celui-ci.

10. Dispositif selon la revendication 9,
**caractérisé en ce que**
le dispositif (16a) de couplage de générateur de vapeur se présente sous une forme verrouillable de manière automatique en état découplé.

11. Dispositif selon la revendication 9 ou 10,
**caractérisé en ce que**
la sortie (16) présente, comme unité de chauffage à vapeur, un dispositif mélangeur pour mélanger la mousse de lait passant du dispositif de moussage à froid ou du lait à vapeur.

12. Dispositif selon la revendication 9 ou 10,
**caractérisé en ce que**
la sortie (16) présente, comme unité de chauffage à vapeur, un échangeur de chaleur chauffé à vapeur.

13. Dispositif selon la revendication 7,
**caractérisé en ce que**
des unités de contrôle (13, 14) internes des organes de commande électriques de la soupape (10) à plusieurs voies et de la pompe (11) sont disposées dans le socle (2a) de boîtier.

14. Dispositif selon la revendication 7,
**caractérisé en ce qu'**
une borne (39) d'alimentation électrique ainsi qu'un contact (9) de démarrage sont disposés dans le socle (2a) de boîtier, ledit contact pouvant être actionné par le récipient (4) de lait insérable et rendant possible une activation d'une alimentation en courant de l'élément (7) Peltier.

15. Dispositif selon la revendication 13,
**caractérisé en ce que**
les unités de contrôle (13, 14) internes présentent une interface pour le raccordement sans fil ou câblé sur une unité de contrôle centrale (31).

16. Appareil de préparation de boissons, notamment appareil de préparation de boissons à base de café avec un générateur de vapeur, qui comprend un dispositif (1) pour préparer de la mousse de lait au choix froide ou chaude ou du lait au choix froid ou chaud selon l'une quelconque des revendications précédentes,
**caractérisé en ce que**
le dispositif de couplage de générateur de vapeur (16a) du dispositif (1) peut être couplé à une conduite de sortie de vapeur (27) du générateur de vapeur munie d'une soupape à vapeur (29) pouvant être commandée.

17. Appareil de préparation de boissons selon la revendication 16,
**caractérisé en ce que**
l'unité de contrôle centrale (31) est une composante de l'appareil de préparation de boissons (30) et
**en ce qu'**un organe d'actionnement de la soupape à vapeur (29) est raccordé à l'unité de contrôle centrale (31).
